# EUROPEAN PATENT SPECIFICATION

(11) **EP 0 490 602 B1**
(45) Date of publication and mention of the grant of the patent: **21.08.1996**
(21) Application number: 91311408.8
(22) Date of filing: 09.12.1991
(51) Int. Cl.: G06K 7/10, G06K 7/14

(54) **Optical scanning apparatus for reading coded symbols**
Optischer Abtastapparat zum Lesen von verschlüsselten Symbolen
Appareil d'exploration optique pour lire des symboles codés

(30) Priority: 10.12.1990 US 625324
(43) Date of publication of application: 17.06.1992
(73) Proprietor: NCR INTERNATIONAL INC., Dayton, Ohio 45479 (US)
(72) Inventor: Lindacher, Joseph Michael, Cambridge, Ohio 43725 (US)
(74) Representative: Robinson, Robert George

(56) References cited:
- EP-A- 0 425 274
- US-A- 4 939 356

## Description

The present invention relates to an optical scanning apparatus and more particularly to a portable coded symbol scanning apparatus which can be operated in a hand-held mode or a fixed hands-free mode.

In present-day merchandising point-of-sale operations, data pertaining to the purchase of a merchandise item is obtained by reading encoded indicia such as a bar code label printed on or attached to the merchandise item. In order to standardize the bar codes used in various point-of-sales checkout systems, the grocery industry has adopted a uniform product code (UPC) which is in the form of a bar code. Reading systems which have been constructed to read this type of bar code include hand-held scanners which are moved across the bar code, and stationary optical scanning systems normally located within the cabinet structure of a checkout counter, in which the bar code is read when a purchased merchandise item is moved across a window constituting the scanning area of the counter, which movement is part of the process of loading the item into a baggage cart. Where the merchandise consist of soft materials such as clothing, hand-held scanners were found to ineffective under certain circumstances. A need has arisen for a bar code scanning device that combines the advantages of both a hand-held, as well as a fixed, hands-free scanner. Such an arrangement is described in US-A-4,766,297 which discloses a scanning device that can be utilized in either a potable mode of operation or a stationary mode of operation. The scanning device includes a portable hand-held scanner and a fixture for receiving and supporting the scanner. The fixture includes a base portion and a head portion interconnected in a spaced apart relationship. When the hand-held scanner is attached to the fixture, it can be operated as a fixed, overhead scanning apparatus. A disadvantage of overhead scanners is that it is sometimes difficult to get a valid read, in particular when scanning bar code labels attached to soft materials. Also, the lifting of articles to bring them into focus in relation to scanning light beams may sometimes be uncomfortable.

EP-A-0425274, which constitutes prior art for novelty purposes only under Article 54(3)EPC, discloses a support unit and a detachably mountable hand held bar code scanner. The scanner can be used when mounted in the support unit because the support unit contains a reading window through which the light emitted by the scanner is transmitted. The scanner will be used in this mode when objects to be scanned are small and light and may be passed over the reading window by the user The scanner can also be used when removed from the support unit, in order to scan heavy or large objects. The support structure further includes mirror means, and holding means for holding the scanner so that, in operation, scanning beams from the scanning device are reflected from the mirror means out of the support structure through the reading window. The reading window lies in the depth of field of the scanner when held in the support structure by the holding means.

It is an object of the present invention to provide a scanning device in which the above disadvantages are alleviated.

Thus, according to the invention, there is provided an optical scanning apparatus for reading coded symbols, including a hand-held scanning device and a support structure for supporting said scanning device so as to enable said scanning device to be used in a hand-free mode, said support structure having a cavity therein and including first and second transparent plates, said first transparent plate forming part of an upper boundary wall of said cavity and said second transparent plate forming part of a side boundary wall of said cavity, said support structure further including locating means for positioning a light output portion of said scanning device above said first transparent plate, and deflection means mounted within said cavity at an angle to said first transparent plate whereby, in operation, with said scanning device supported by said support structure and positioned by said locating means, scanning light beams from said scanning device are projected into said cavity through said first transparent plate and are reflected by said deflection means out of said cavity through said second transparent plate, said second transparent plate lying within the depth of field of said scanning device.

Advantages of the apparatus of the present invention are that it is portable, simple in construction and low in cost.

A further advantage is that the scanning apparatus may be orientated in a plurality of scanning positions.

The invention will now be described, by way of example with reference to the accompanying drawings wherein like reference numerals indicate like or corresponding parts throughout the several views and wherein:
Fig. 1 is a side view of one embodiment of a portable optical bar code scanning apparatus of the present invention showing the location of a hand-held scanner when positioned on a housing member together with a removable handle support member and a multiline scanning pattern generated by the scanner;
Fig. 2 is a sectional view taken on line 2-2 of Fig. 1 showing the location and orientation of a reflecting mirror member;
Fig. 3 is a rear elevational view of the bar code scanning apparatus of Fig. 1 showing the mounting of the handle of the hand-held scanner on the movable support member;
Fig. 4 is a top elevational view of the housing member of the bar code scanning apparatus of Fig. 1;
Fig. 5 is a side elevational view of a second embodiment of the scanning apparatus of the present invention showing the hand-held scanner mounted offset to the top horizontal surface of the housing member;
Fig.6 is a side elevational view of a mirror housing assembly;
Fig. 7 is top elevational view of the mirror housing assembly showing the skew angle of the reflecting mirror member when mounted in the mirror housing assembly; and
Fig. 8 is a sectional view taken on line 8-8 of Fig. 5 showing details of the mounting of the mirror housing assembly within the housing member,

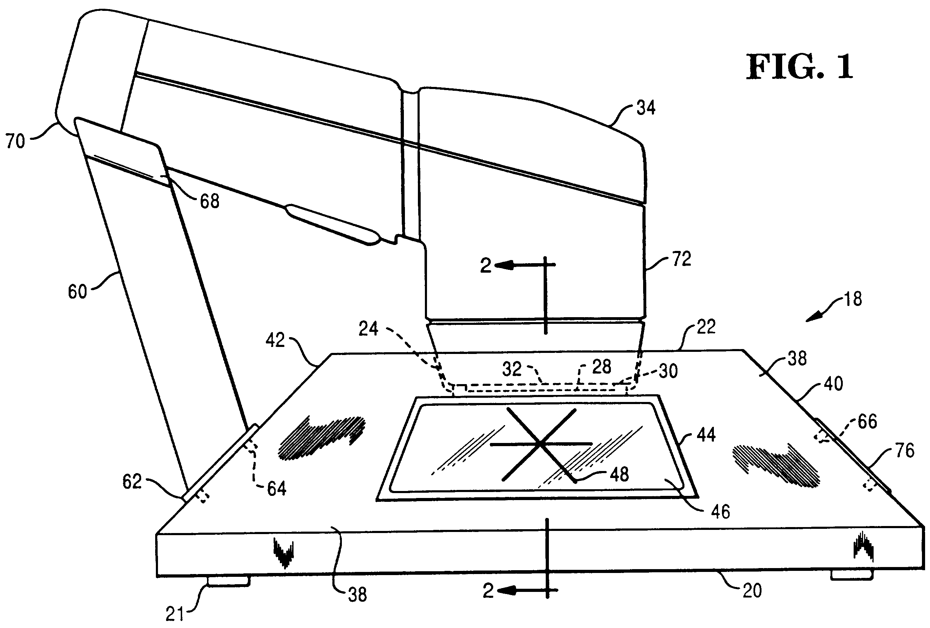

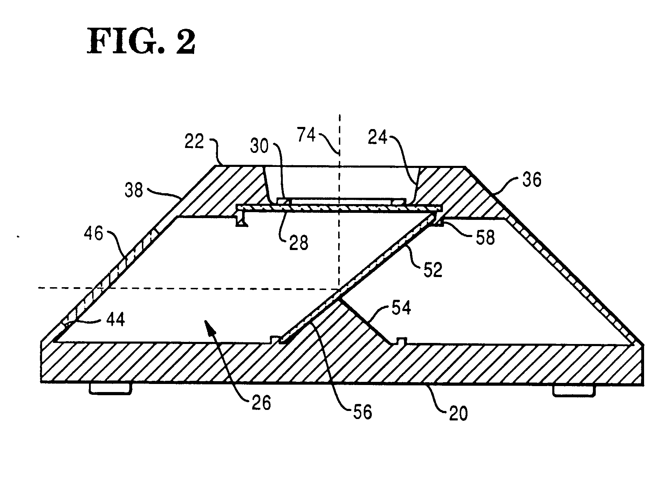

Referring now to Fig. 1, there is shown a side view of the bar code scanning device of the present invention generally indicated by the numeral 18 including a support structure formed by a housing member 20 having a top horizontal surface 22 including an aperture 24 communicating with a cavity 26 (Fig. 2) formed within the housing member 20. Secured to the bottom surface of the housing member 20 are supporting pad members 21. As best seen in Fig. 2, mounted within the aperture 24 is an entrance transparent plate 28 on which is positioned a plastic guard member 30 which is engaged by a light output portion 32 (Fig. 1) of a scanning head portion 72 of a hand-held optical bar code scanner 34 inserted into the aperture 24 as part of a scanning operation as will be described more fully hereinafter.

The housing member 20 includes a pair of side sloping walls 36, 38 and a front 40 and rear 42 sloping wall. As best shown in Figs. 1, 2 and 4, located in the side wall 38 is an aperture 44 within which is mounted an exit transparent plate 46. The plate 46 is preferably constructed of a transparent material such as water white glass which will display a multi-line scan pattern 48 projected by the bar code scanner 34 in a manner that will now be described.

Mounted within the interior portion 26 of the housing member 20 is a reflecting mirror member 52 (Fig. 2) having one end positioned on an abutment portion 54 of the housing member 20 which has its abutting surface 56 inclined at an angle of approximately 45 degrees. The other end of the mirror member 52 engages a depending portion 58 of the housing member 20 which is located adjacent the aperture 24.

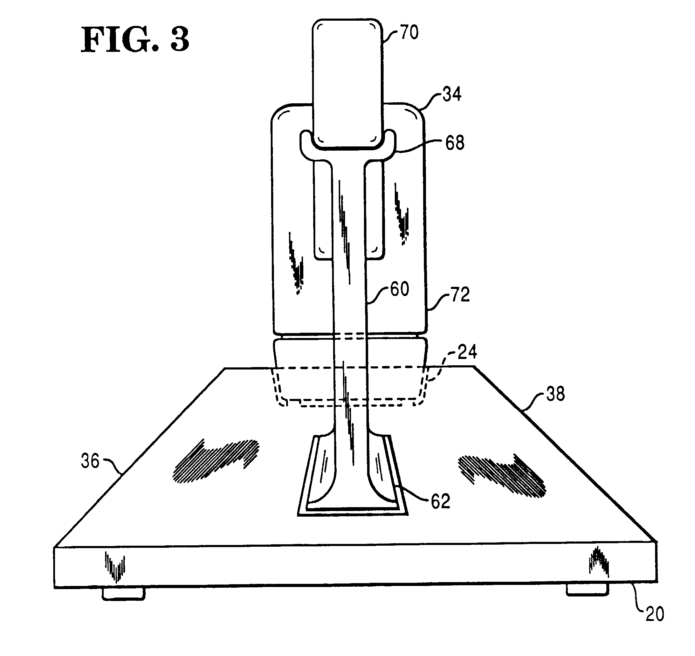

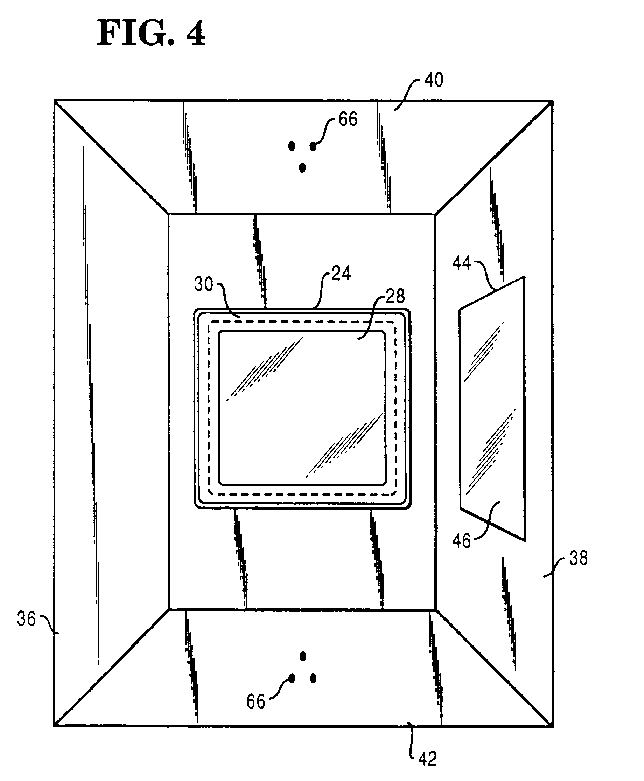

Associated with the housing member 20 is a removable elongated support member 60 (Figs. 1 and 3) having a lower mounting portion 62 in which are located three stud members 64 which are inserted into correspondingly located holes 66 (Fig. 4) in each of the front 40 and rear 42 sloping walls. As best seen in Fig. 3, the support member 60 has an upper U-shaped supporting portion 68 within which is positioned a handle portion 70 of the bar code scanner 34 for positioning the scanning head portion 72 of the scanner 34 within the aperture 24 and on the plastic guard member 30.

In the operation of the bar code scanning device 18, the operator will position the handle portion 70 of the hand-held scanner 34 within the supporting portion 68 of the support member 60. The operator will then lay the front face portion 32 of the scanner 34 on to the plastic guard member 30 within the aperture 24 and turn on the scanner which projects the scanning light beams formin, the scan pattern 48 along the beam axis 74 (Fig. 2) through the entrance plate 28 on to the reflecting mirror member 52 from where the light beams are reflected out of the cavity 26 through the exit transparent plate 46. The plate 46 lies within the depth of field of the scanner 34, and in scanning a bar code label, the label is positioned on the surface of the plate 46 and moved across the scanning pattern 48 for reading the bar code label in a manner that is well known in the art.

In the present embodiment, the depth of field of the projected scanning light beams extends from about 25 millimetres in front of the hand-held scanner 34 to a position adjacent the outer face of the exit transparent plate 46. As previously described, the angle of the mirror member 52 is approximately 45 degrees to the exit plate 46. It is obvious that the plate 46 and the mirror 52 may be oriented at different angles to accomplish the projection of the scanning pattern on the surface of the plate 46. One of the controlling factors in designing the angle geometry of the plates 28, 46 and the mirror 52 is the depth of field of the scanning pattern projected by the hand-held scanner 34. It is desirable that the scanning pattern 48 be in focus when projected on the exit transparent plate 46. When the configuration of the checkout station, in which the bar code scanner is mounted, requires it, the orientation of the bar code scanner 34 can be reversed from the position shown in Fig. 1. This is accomplished by removing the support member 60 from the rear wall 42 and mounting the support member 60 on the front wall 40 utilizing the holes 66 (Fig. 4) in the wall 40. The holes 66 in the wall 42 can accommodate a cover member 76 (Fig. 1) when not in use to support the support member 60.

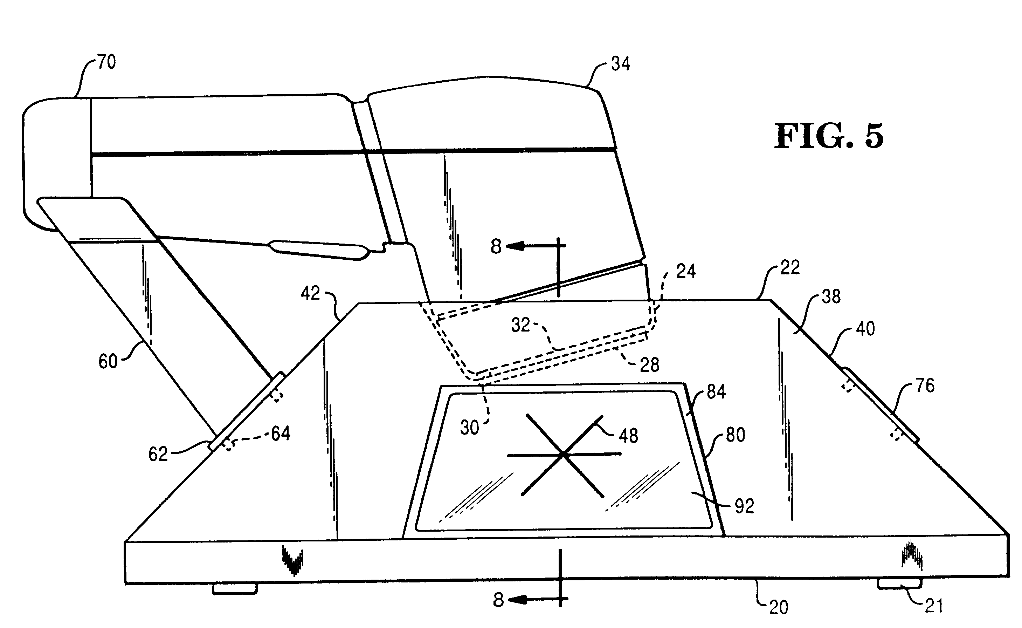

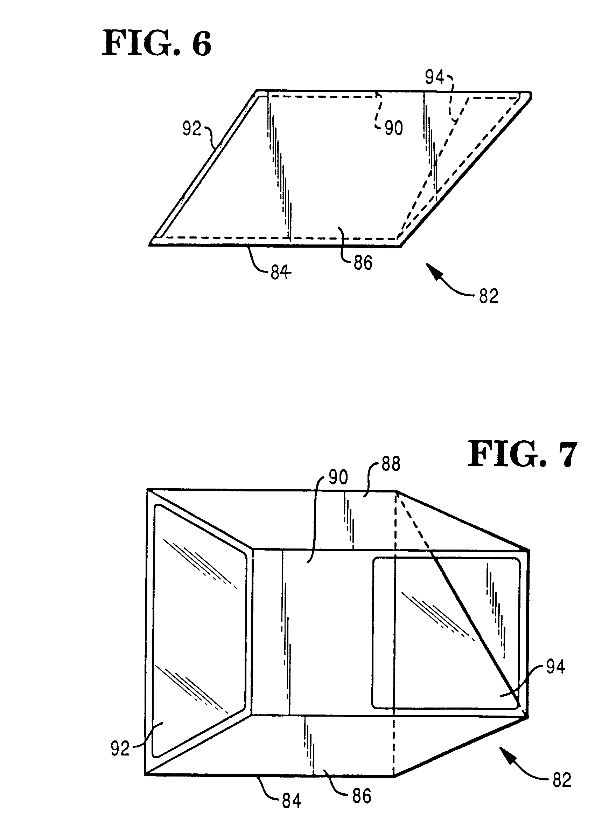

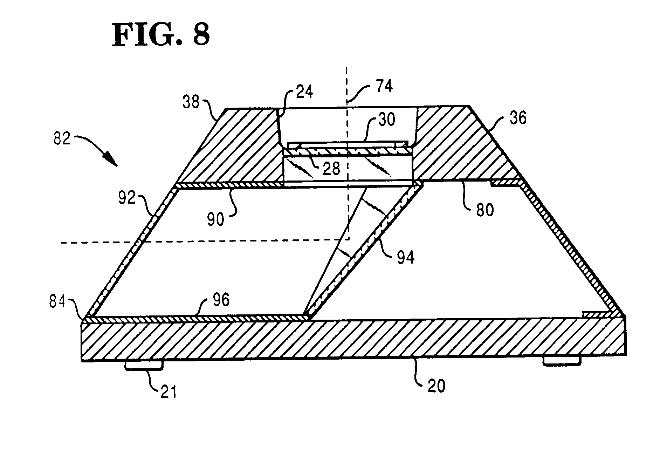

Referring now to Fig. 5, there is shown a second embodiment of the scanning apparatus of the present invention in which the aperture 24 is offset to the horizontal surface 22 of the housing member 20 to allow the handle portion 70 of the bar code scanner 34 to be positioned for easier grasping by the operator and to make the scanning apparatus more compact. The housing member 20 further includes a cavity 80 which extends horizontally through the housing member 20 (Fig. 8) and in which is slidably mounted a mirror housing assembly generally indicated by the numeral 82 (Figs. 5-8 inclusive) comprising a support member 84 which is slidably inserted from either side of the housing member 20 in the cavity 80 extending between the sloping side walls 36, 38 (Fig. 8). The support member 84 includes a pair of opposing side wall portions 86, 88 (Fig. 7), a partially extending top surface portion 90 and a transparent plate 92 mounted at one end of the support member 84 and having a slope corresponding to the slope of the side wall portions 86,88 (Fig. 8). A mirror means 94 is orientated at a first angle of approximately forty five degrees (Figs. 6 and 8) to the floor portion 96 of the support member 84 and skewed at a second angle (Fig. 7) between the side wall portions 86, 88 enabling the scanning light beams which are projected along the beam axis 74 (Fig. 8) by the scanner 34 to be reflected by the mirror member 94 through the transparent plate 92 for scanning a bar code label positioned adjacent the plate 92. It will be seen from this construction that the support member 84 may be inserted from either side of the housing member 20 facilitating a scanning operation on either side of the housing member 20.

It will be seen from the embodiments of the invention disclosed that a checkout operator can easily adjust the position of the housing member to conveniently move the bar code label past the scanning plate 46 or 92 utilizing both hands to grasp the article to which the bar code label is attached.

## Claims

1. An optical scanning apparatus for reading coded symbols, including a hand-held scanning device (34) and a support structure (20) for supporting said scanning device so as to enable said scanning device to be used in a hands-free mode, said support structure having a cavity (26) therein and including first and second transparent plates (28, 46), said first transparent plate (28) forming part of an upper boundary wall of said cavity (26) and said second transparent plate (46) forming part of a side boundary wall of said cavity (26), said support structure (20) further including locating means (24, 60) for positioning a light output portion (32) of scanning device (34) above said first transparent plate (28), and deflection means (52, 94) mounted within said cavity at an angle to said first transparent plate (28) whereby, in operation, with said scanning device (34) supported by said support structure (20) and positioned by said locating means (24, 60), scanning light beams from said scanning device are projected into said cavity (26) through said first transparent plate (28) and are reflected by said deflection means (52) out of said cavity through said second transparent plate (46), said second transparent plate lying within the depth of field of said scanning device (34).

2. An apparatus according to claim 1, characterized in that said deflection means consist of mirror means (94) secured to a carrier (82) slidably mounted within said cavity (84).

3. An apparatus according to either claim 1 or 2, characterized in that said second transparent plate (46, 92) is inclined from the horizontal.

4. An apparatus according to any one of claims 1 to 3, characterized in that said scanning light beams are projected on to said deflection means (52, 94) at an angle of 45 degrees.

5. An apparatus according to any one of claims 1 to 4, characterized in that said hand-held scanning device (34) has a nose portion (32), and that said support structure (20) has an aperture (24) as part of said locating means (24, 60) shaped to accommodate said nose portions (32).

6. An apparatus according to claim 5, characterized in that said first transparent plate (28) is mounted within said aperture (24).

7. An apparatus according to any one of the preceding claims, characterized in that said locating means (24,60) includes a support (60) removably mounted on said support structure (20) in a first position or in a second position whereby said hand-held scanning device (34) may be mounted in different positions in relation to said support structure (20).

## Patentansprüche

1. Optischer Abtastapparat zum Lesen von verschlüsselten Symbolen, mit einer handgeführten Abtastvorrichtung (34) und einem Traggestell (20) zum Abstützen der
Abtastvorrichtung, um die Abtastvorrichtung in die Lage zu versetzen, in einem Freihandmodus eingesetzt zu werden, wobei das Traggestell einen Hohlraum (26) darin besitzt und erste und zweite lichtdurchlässige Platten (28, 46) aufweist, wobei die erste Platte (28) Teil einer oberen Begrenzungswand des Hohlraums (26) ist und die zweite lichtdurchlässige Platte (46) Teil einer
Seitenbegrenzungswand des Hohlraums (26) ist, und das Traggestell (20) ferner eine Einstellvorrichtung (24, 60) zum Positionieren eines Lichtausgangsabschnitts (32) der Abtastvorrichtung (34) über der ersten lichtdurchlässigen Platte (28) aufweist sowie eine Ablenkeinrichtung (52, 94), die in dem Hohlraum in einem Winkel zu der ersten lichtdurchlässigen Platte (28) angebracht ist, wodurch im Betrieb, wenn die Abtastvorrichtung (34) durch das
Traggestell (20) abgestützt und durch die
Einstellvorrichtung (24, 60) positioniert ist, von der Abtastvorrichtung ausgehende Abtastlichtstrahlen durch die erste lichtdurchlässige Platte (28) in den Hohlraum (26) hineinprojiziert und von der Ablenkeinrichtung (52) durch die zweite lichtdurchlässige Platte (46) aus dem Hohlraum herausreflektiert werden, wobei die zweite lichtdurchlässige Platte innerhalb der Schärfentiefe der Abtastvorrichtung (34) liegt.

2. Apparat nach Anspruch 1, dadurch gekennzeichnet, daß die Ablenkeinrichtung aus einer Spiegeleinrichtung (94) besteht, die an einem innerhalb des Hohlraums (84) verschiebbar montierten Träger (82) befestigt ist.

3. Apparat nach einem der Ansprüche 1 oder 2, dadurch gekennzeichnet, daß die zweite lichtdurchlässige Platte (46, 92) von der Horizontalen weggeneigt ist.

4. Apparat nach einem der Ansprüche 1 bis 3, dadurch gekennzeichnet, daß die Abtastlichtstrahlen in einem Winkel von 45° auf die Ablenkeinrichtung (52, 94) projiziert werden.

5. Apparat nach einem der Ansprüche 1 bis 4, dadurch gekennzeichnet, daß die handgeführte Abtastvorrichtung (34) einen vorspringenden Abschnitt (32) aufweist und das Traggestell (20) einen Ausschnitt (24) als Teil der Einstellvorrichtung (24, 60) aufweist, der zur Aufnahme des vorspringenden Abschnitts (32) ausgeformt ist.

6. Apparat nach Anspruch 5, dadurch gekennzeichnet, daß die erste lichtdurchlässige Platte (28) innerhalb des Ausschnitts (24) angebracht ist.

7. Apparat nach einem der vorhergehenden Ansprüche, dadurch gekennzeichnet, daß die Einstellvorrichtung (24, 60) eine Halterung (60) aufweist, die in einer ersten Position oder in einer zweiten Position entfernbar auf dem Traggestell (20) montiert ist, wodurch die handgeführte Abtastvorrichtung (34) in unterschiedlichen Positionen in Bezug auf das Traggestell (20) befestigt werden kann.

## Revendications

1. Un appareil de balayage optique pour lire les symboles codés, comportant un dispositif de balayage à main (34) et une structure de support (20) pour supporter ledit dispositif de balayage de façon à permettre l'utilisation dudit dispositif de balayage en mode mains libres, ladite structure de support comportant une cavité (26) et comprenant des première et deuxième plaques transparentes (28, 46), ladite première plaque transparente (28) faisant partie d'une paroi limite supérieure de ladite cavité (26) et ladite deuxième plaque transparente (46) faisant partie d'une paroi limite latérale de ladite cavité (26), ladite structure de support (20) comportant encore un moyen de positionnement (24, 60) pour positionner une partie sortie de lumière (32) dudit dispositif de balayage (34) au-dessus de ladite première plaque transparente (28), et un moyen de déviation (52, 94) monté dans ladite cavité à un angle par rapport à ladite première plaque transparente (28) par quoi, lors du fonctionnement, ledit dispositif de balayage (34) étant supporté par ladite structure de support (20) et positionné par ledit moyen de positionnement (24, 60), les faisceaux lumineux de balayage dudit dispositif de balayage sont projetés dans ladite cavité (26) à travers ladite première plaque transparente (28) et sont réfléchis par ledit moyen de déviation (52) hors de ladite cavité à travers ladite deuxième plaque transparente (46), ladite deuxième plaque transparente étant située dans la profondeur de champ dudit dispositif de balayage (34).

2. Un appareil conformément à la revendication 1, caractérisé en ce que ledit moyen de déviation se compose d'un moyen miroir (94) fixé à un support (82) monté, de façon à pouvoir glisser, dans ladite cavité (84).

3. Un appareil conformément à la revendication 1 ou 2, caractérisé en ce que ladite deuxième plaque transparente (46, 92) est inclinée par rapport à l'horizontale.

4. Un appareil conformément à l'une quelconque des revendications 1 à 3, caractérisé en ce que lesdits faisceaux lumineux de balayage sont projetés sur ledit moyen de déviation (52, 94) à un angle de 45 degrés.

5. Un appareil conformément à l'une quelconque des revendications 1 à 4, caractérisé en ce que ledit dispositif de balayage à main (34) a une partie nez (32), et en ce que ladite structure de support (20) a une ouverture (24) faisant partie dudit moyen de positionnement (24, 60) formée pour recevoir ladite partie nez (32).

6. Un appareil conformément à la revendication 5, caractérisé en ce que ladite première plaque transparente (28) est montée dans ladite ouverture (24).

7. Un appareil conformément à l'une quelconque des revendications précédentes, caractérisé en ce que ledit moyen de positionnement (24, 60) comporte un support (60) monté, de façon à pouvoir être détaché, sur ladite structure de support (20) dans une première position ou dans une deuxième position par quoi ledit dispositif de balayage à main (34) peut être monté dans des positions différentes par rapport à ladite structure de support (20).
